# EUROPEAN PATENT SPECIFICATION

(11) **EP 4 528 845 B1**
(45) Date of publication and mention of the grant of the patent: **12.08.2026**
(21) Application number: 23877617.3
(22) Date of filing: 10.10.2023
(51) Int. Cl.: H01M 4/134, H01M 4/133, H01M 4/48, H01M 4/587, H01M 4/62, H01M 4/525, H01M 4/505, H01M 4/1395, H01M 4/1393, H01M 10/0525, H01M 4/02

(54) **NEGATIVE ELECTRODE AND SECONDARY BATTERY**
NEGATIVELEKTRODE UND SEKUNDÄRBATTERIE
ÉLECTRODE NÉGATIVE ET BATTERIE SECONDAIR

(30) Priority: 13.10.2022 KR 20220131727
(43) Date of publication of application: 26.03.2025
(60) Divisional application: 26184199.3 / 4 779 696
(73) Proprietor: LG Energy Solution, Ltd., Seoul 07335 (KR)
(72) Inventor: LEE, Gyeongseop, Daejeon 34122 (KR); PIAO, Lilin, Daejeon 34122 (KR); KIM, Minsoo, Daejeon 34122 (KR); KIM, Shulkee, Daejeon 34122 (KR); PARK, Kyutae, Daejeon 34122 (KR); BAEK, Sora, Daejeon 34122 (KR); YOO, Kwang Ho, Daejeon 34122 (KR); JUNG, Wonhee, Daejeon 34122 (KR)
(74) Representative: Plasseraud IP
(86) International application number: PCT/KR2023/015494
(87) International publication number: WO 2024/080689

(56) References cited:
- EP-A1- 3 968 407
- WO-A2-2011/087588
- KR-A- 20200 055 448
- KR-A- 20200 055 448
- KR-A- 20220 009 280
- KR-A- 20220 009 280
- KR-A- 20220 015 222
- KR-A- 20220 015 222
- US-A1- 2017 149 049

## Description

### [Technical Field]

This application claims priority to and the benefit of Korean Patent Application No. 10-2022-0131727 filed in the Korean Intellectual Property Office on October 13, 2022.

The present invention relates to a negative electrode for a secondary battery and a secondary battery including the same.

### [Background Art]

A secondary battery is universally applied not only to a portable device, but also to an electric vehicle (EV) or a hybrid electric vehicle (HEV) that is driven by an electrical driving source.

The secondary battery is attracting attention as a new energy source to improve eco-friendliness and energy efficiency because of the primary advantage that the use of fossil fuels can be dramatically reduced and the advantage that no by-products are generated from the use of energy.

In general, a secondary battery includes a positive electrode, a negative electrode, a separator interposed between the positive electrode and the negative electrode, an electrolyte, and the like. In addition, the electrode such as a positive electrode and a negative electrode may have an electrode active material layer provided on a current collector.

As utilization of the secondary battery increases, various battery performances are required. For improvement in battery performance, attempts are being made to control a composition of an active material of a positive electrode or negative electrode active material layer or an additive. However, a wrong combination of materials may have an adverse effect on the performance of the final battery. Accordingly, research on improving battery performance with a combination of materials for a positive electrode and a negative electrode is necessary. KR 2022 0009280 A, KR 2020 0055448 A, KR 2022 0015222 A and EP 3968407 A1 disclose negative electrodes.

### [Detailed Description of the Invention]

### [Technical Problem]

The present invention has been made in an effort to provide a negative electrode for a secondary battery capable of providing a secondary battery with improved rapid charge characteristics, and a secondary battery including the same.

### [Technical Solution]

The present invention is defined according to the appended claims which provide a negative electrode for a secondary battery including: a current collector; a first negative electrode active material layer provided on the current collector; and a second negative electrode active material layer provided on the first negative electrode active material layer, wherein a porosity of the second negative electrode active material layer is 5% to 20% higher than a porosity of the first negative electrode active material layer, and wherein the first and second negative electrode active material layers each comprise a negative electrode active material, the negative electrode active material comprises a silicon-based active material, artificial graphite, and natural graphite, and the silicon-based active material comprises at least one of SiOₓ (0≤x<2), SiM_{y} (M is metal, 1≤y≤4) and Si/C, and wherein the silicon-based active material is included in an amount of 1 to 40 parts by weight on the basis of total 100 parts by weight of the active material included in each of the first and second negative electrode active material layers.

The present invention also provides a secondary battery including the negative electrode for a secondary battery described above, a positive electrode, and a separator.

### [Advantageous Effects]

According to the embodiments described in the present specification, rapid charge performance can be improved by adjusting the porosities of the two layers in the two-layer structure of the negative electrode active material layers to be different from each other. Specifically, the higher the porosity, the more advantageous it is for rapid charge. When the porosity of the upper layer (second negative electrode active material layer) is higher than that of the lower layer (first negative electrode active material layer), the overall porosity is the same, but the porosity of the part close to the electrolyte is higher, resulting in improved rapid charge effect.

### [Brief Description of Drawings]

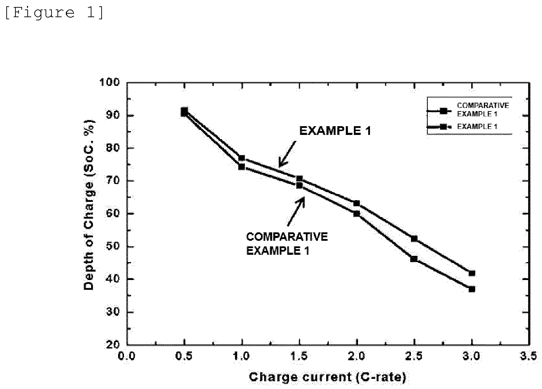

FIG. 1 is a graph showing a chargeable depth of SOC per C-rate of negative electrodes prepared in Example and Comparative Example.

### [Best Mode]

Hereinafter, the present invention will be described in more detail for better understanding of the present invention. The present invention may be implemented in various different forms, and is not limited to the embodiments described herein, being defined by the appended claims. The terms or words used throughout the specification and the claims should not be construed as being limited to their ordinary or dictionary meanings, but construed as having meanings and concepts consistent with the technical idea of the present invention, based on the principle that an inventor may properly define the concepts of the words or terms to best explain the invention.

It will be further understood that the terms "comprises", "includes" or "have" when used in the present specification specify the presence of stated features, integers, steps, constitutional elements and/or combinations thereof, but do not preclude the presence or addition of one or more other features, integers, steps, constitutional elements, and/or combinations thereof.

Further, it will be understood that when an element such as a layer is referred to as being "on" another element, it can be "directly on" the other element or an intervening element may also be present. In contrast, when an element is referred to as being "directly on" another element, there are no intervening elements present. Further, when an element is referred to as being "on" a reference portion, the element is positioned above or below the reference portion, and it does not necessarily mean that the element is positioned "above" or "on" in a direction opposite to gravity.

In the present specification, descriptions referred to only as "negative electrode active material layer" without first and second expressions may be applied to both the first and second negative electrode active material layers.

A negative electrode for a secondary battery according to an embodiment of the present specification includes: a current collector; a first negative electrode active material layer provided on the current collector; and a second negative electrode active material layer provided on the first negative electrode active material layer, wherein a porosity of the second negative electrode active material layer is 5% to 20% higher than a porosity of the first negative electrode active material layer.

When the porosity of the second negative electrode active material layer is higher than that of the first negative electrode active material layer, the overall porosity is the same, but the porosity of the part close to the electrolyte is higher, resulting in improved rapid charge effect.

The porosity of the second negative electrode active material layer is 5% to 20%, for example, 10% to 20% higher than the porosity of the first negative electrode active material layer. In theory, the larger the difference in porosity, the better the rapid charge performance. However, if the difference in porosity is too large, it may have an adverse effect on life and durability of a cell.

According to an embodiment, the porosities of the first negative electrode active material layer and the second negative electrode active material layer may be 15% to 40%, respectively.

According to an embodiment, the first and second negative electrode active material layers may include one or more of a particulate conductive material, a linear conductive material, and a planar conductive material as a conductive material. The particulate conductive material, linear conductive material, and/or planar conductive material included in the first and second negative electrode active material layers may be the same type or different types.

Examples of the particulate conductive material may include graphite such as natural graphite and artificial graphite; carbon black such as acetylene black, Ketjen black, channel black, furnace black, lamp black, and thermal black, and the like.

Examples of the linear conductive material may include a conductive fiber such as carbon fiber and metal fiber; a conductive tube such as a carbon nanotube, for example, a single-walled carbon nanotube (SWCNT) and a multi-walled carbon nanotube (MWCNTs); fluorocarbon; metal powder such as aluminum, and nickel powder; a conductive whisker such as zinc oxide and potassium titanate; a conductive metal oxide such as titanium oxide; a conductive material such as a polyphenylene derivative, and the like.

Examples of the planar conductive material may include graphene, and the like.

According to an embodiment, the negative electrode conductive material may be included in an amount of 0.1 to 5 parts by weight based on 100 parts by weight of each of the first and second negative electrode active material layers.

The first and second negative electrode active material layers each include a negative electrode active material, and the negative electrode active material includes a silicon-based active material and a carbon-based active material. The carbon-based active material may include artificial graphite and/or natural graphite.

The silicon-based active material includes at least one of SiOₓ (0≤x<2), SiM_{y} (M is metal, 1≤y≤4), and Si/C.

The silicon-based active material may include only one type, or two or more types together. When all the two negative electrode active material layers include silicon-based active materials, the same type of silicon-based active material, or different types or different combinations of silicon-based active materials may be used for the two active material layers.

The first and second negative electrode active material layers each include 1 to 40 parts by weight, for example, 1 to 20 parts by weight of the silicon-based active material based on total 100 parts by weight of the negative electrode active material.

The active material including SiOx (0≤x<2) as the silicon-based active material may be a silicon-based composite particle including SiOₓ (0<x<2) and a pore.

The SiOx (0<x<2) corresponds to a matrix in the silicon-based composite particle. The SiOₓ(0<x<2) may be a form of including Si and SiO₂, and the Si may form a phase. That is, x corresponds to a ratio of the number of O to Si included in the SiOₓ(0<x<2). When the silicon-based composite particle includes the SiOₓ (0<x<2), a discharge capacity of a secondary battery can be improved.

The silicon-based composite particle may further include at least one of an Mg compound and a Li compound. The Mg compound and the Li compound may correspond to a matrix in the silicon-based composite particle.

The Mg compound and/or the Li compound may be present in the SiOx (0<x<2) and/or on a surface of the SiOx (0<x<2). The initial efficiency of the battery can be improved by the Mg compound and/or the Li compound.

The Mg compound may include at least one selected from the group consisting of Mg silicate, Mg silicide, and Mg oxide. The Mg silicate may include at least one of Mg₂SiO₄ and MgSiO₃. The Mg silicide may include Mg₂Si. The Mg oxide may include MgO.

In an embodiment of the present specification, the Mg element may be included in an amount of 0.1 wt% to 20 wt% or 0.1 wt% to 10 wt% on the basis of 100 wt% of a total of the silicon-based active material. Specifically, the Mg element may be included in an amount of 0.5 wt% to 8 wt% or 0.8 wt% to 4 wt%. When the above range is satisfied, the Mg compound can be included in an appropriate content in the silicon-based active material, so the volume change of the silicon-based active material during charging and discharging of the battery can be easily suppressed, and the discharge capacity and initial efficiency of the battery can be improved.

The Li compound may include at least one selected from the group consisting of Li silicate, Li silicide, and Li oxide. The Li silicate may include at least one of Li₂SiO₃, Li₄SiO₄ and Li₂Si₂O₅. The Li silicide may include Li₇Si₂. The Li oxide may include Li₂O.

In an embodiment of the present invention, the Li compound may include a form of lithium silicate. The lithium silicate is represented by LiₐSi_{b}O_{c}(2≤a≤4, 0<b≤2, 2≤c≤5) and may be divided into crystalline lithium silicate and amorphous lithium silicate. The crystalline lithium silicate may be present in the silicon-based composite particle in a form of at least one lithium silicate selected from the group consisting of Li₂SiO₃, Li₄SiO₄ and Li₂Si₂O₅, and the amorphous lithium silicate may be a form of LiₐSi_{b}O_{c} (2≤a≤4, 0<b≤2, 2≤c≤5). However, the present invention is not limited thereto.

In an embodiment of the present specification, the Li element may be included in an amount of 0.1 wt% to 20 wt% or 0.1 wt% to 10 wt% on the basis of 100 wt% of a total of the silicon-based active material. Specifically, the Li element may be included in an amount of 0.5 wt% to 8 wt%, and more specifically, 0.5 wt% to 4 wt%. When the above range is satisfied, the Li compound can be included in an appropriate content in the silicon-based active material, so the volume change of the negative electrode active material during charging and discharging of the battery can be easily suppressed, and the discharge capacity and initial efficiency of the battery can be improved.

The content of the Mg element or Li element can be confirmed through ICP analysis. For the ICP analysis, a predetermined amount (about 0.01 g) of a negative electrode active material is precisely aliquoted, transferred to a platinum crucible, and completely decomposed on a hot plate by adding nitric acid, hydrofluoric acid and sulfuric acid thereto. Then, by using an inductively coupled plasma atomic emission spectrometer (ICP-AES, Perkin-Elmer 7300), a reference calibration curve is obtained by measuring the intensity of a standard liquid, which has been prepared using a standard solution (5 mg/kg), at an intrinsic wavelength of the Mg element or Li element. Subsequently, a pre-treated sample solution and a blank sample are introduced into the spectrometer, and by measuring the intensity of each component to calculate an actual intensity, calculating the concentration of each component based on the obtained calibration curve, and then performing a conversion such that the sum of the calculated concentrations of the components is equal to a theoretical value, the Mg element or Li element content in the prepared silicon-based active material can be analyzed.

In an embodiment of the present specification, a carbon layer may be provided on a surface of the silicon-based composite particle and/or inside the pore. Conductivity is imparted to the silicon-based composite particle by the carbon layer, so that the initial efficiency, life characteristics, and battery capacity characteristics of a secondary battery including the negative electrode active material including the silicon-based composite particle can be improved. A total amount of the carbon layer included may be 5 wt% to 40 wt% on the basis of a total 100 wt% of the silicon-based composite particle.

In an embodiment of the present specification, the carbon layer may include at least one of amorphous carbon or crystalline carbon.
An average particle diameter (D₅₀) of the silicon-based active material may be 2 µm to 15 µm, specifically 3 µm to 12 µm, and more specifically 4 µm to 10 µm. When the above range is satisfied, a side reaction between the silicon-based composite particle and the electrolyte solution is controlled, and the discharge capacity and initial efficiency of the battery can be effectively implemented.

In the present specification, the average particle diameter (D₅₀) may be defined as a particle diameter corresponding to 50% of the cumulative volume in the particle diameter distribution curve of particles. The average particle diameter (D₅₀) may be measured using, for example, a laser diffraction method. In the laser diffraction method, in general, particle diameters ranging from a submicron range to several millimeters can be measured, and results with high reproducibility and high resolvability can be obtained.

The active material including Si/C as the silicon-based active material is a composite of Si and C, and is distinguished from silicon carbide denoted as SiC. The silicon carbon composite may be a composite of silicon, graphite, etc., and may form a structure in which a core composite of silicon, graphite, etc. is surrounded by graphene, amorphous carbon or the like. In the silicon carbon composite, silicon may be nano silicon.

In an embodiment of the present specification, the artificial graphite and the natural graphite may be included in an amount of 60 parts by weight or more and 99 parts by weight or less on the basis of 100 parts by weight of the negative electrode active material. The artificial graphite and the natural graphite may be included at a weight ratio of 1:9 to 9:1, for example, 2:8 to 8:2.

In an embodiment of the present specification, the negative electrode active material may be included in an amount of 80 parts by weight or more and 99.9 parts by weight or less, and preferably 80 parts by weight or more and 90 parts by weight or less, on the basis of 100 parts by weight of each of the first and second negative electrode active material layers.

According to an additional embodiment of the present specification, the negative electrode active material layer may further include a negative electrode binder, in addition to the negative electrode active material.

The negative electrode binder may serve to improve adhesion between particles of the negative electrode active material and adhesive force between particles of the negative electrode active material and the negative electrode current collector. For the negative electrode binder, those known in the art may be used. Non-limiting examples thereof may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The negative electrode binder may be included in an amount of 0.1 part by weight or more and 20 parts by weight or less, for example, preferably 0.3 part by weight or more and 20 parts by weight or less, and more preferably 0.5 part by weight or more and 10 parts by weight or less on the basis of 100 parts by weight of the negative electrode active material layer.

In an embodiment of the present specification, a thickness of each of the first and second negative electrode active material layers may be 5 µm or greater and 100 µm or less, for example, 10 µm or greater and 70 µm or less.

In an embodiment of the present specification, the negative electrode current collector is not particularly limited as long as it has conductivity without causing a chemical change in the battery. For example, for the current collector, copper, stainless steel, aluminum, nickel, titanium, fired carbon, aluminum or stainless steel each surface-treated with carbon, nickel, titanium, silver, or the like, or the like may be used. Specifically, transition metals that adsorb carbon well, such as copper and nickel, may be used for the current collector. A thickness of the current collector may be 1 µm to 500 µm. However, the thickness of the current collector is not limited thereto.

An additional embodiment of the present specification provides a secondary battery including the negative electrode according to the above-described embodiments, a positive electrode, and a separator.

In an embodiment of the present specification, the positive electrode may include a positive electrode current collector and a positive electrode active material layer formed on the positive electrode current collector and including the positive electrode active material. A thickness of the positive electrode active material layer may be 20 µm or greater and 500 µm or less.

The positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 1 to 500 µm, and a surface of the current collector may be formed with microscopic irregularities to enhance adhesion of the positive electrode active material. For example, the positive electrode current collector may be used in various forms such as a film, a sheet, a foil, a net, a porous body, a foamed body, and a non-woven fabric body.

In an embodiment of the present specification, the positive electrode may include a lithium composite transition metal compound including nickel (Ni) and cobalt (Co), as an active material. The lithium composite transition metal compound may further include at least one of manganese and aluminum. The lithium composite transition metal compound may include 80 mol% or more, for example, 80 mol% or more and less than 100 mol% of nickel among metals other than lithium.

In an embodiment, the positive electrode active material in 100 parts by weight of the positive electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, and most preferably 98 parts by weight or more and 99.9 parts by weight or less.

According to a further embodiment of the present specification, the positive electrode active material layer according to the embodiment described above may further include a positive electrode binder and a conductive material.

The positive electrode binder may serve to improve adhesion between particles of the positive electrode active material and adhesive force between particles of the positive electrode active material and the positive electrode current collector. For the positive electrode binder, those known in the art may be used. Non-limiting examples thereof may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, various copolymers thereof, and the like, and any one thereof or a mixture of two or more thereof may be used.

The positive electrode binder may be included in an amount of 0.1 part by weight or more and 50 parts by weight or less, for example, preferably 0.3 part by weight or more and 35 parts by weight or less, and more preferably 0.5 part by weight or more and 20 parts by weight or less on the basis of 100 parts by weight of the positive electrode active material layer.

The conductive material included in the positive electrode active material layer is used to impart conductivity to the electrode, and can be used without particular limitation as long as the conductive material has electronic conductivity without causing a chemical change in a battery. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

Specifically, in an embodiment, the conductive material may include one or more of a single-walled carbon nanotube (SWCNT) and a multi-walled carbon nanotube (MWCNT). The conductive material may be included in an amount of 0.1 part by weight or more and 2 parts by weight or less, for example, preferably 0.3 part by weight or more and 1.5 parts by weight or less, and more preferably 0.5 part by weight or more and 1.2 parts by weight or less on the basis of 100 parts by weight of the composition for a positive electrode active material layer.

The positive electrode and the negative electrode can be manufactured according to a conventional method for manufacturing a positive electrode and a negative electrode, except using the positive electrode and negative electrode active materials described above. Specifically, the electrodes can be manufactured by applying a composition for active material layer formation, including the above-described active material and, optionally, a binder and a conductive material, onto a current collector, followed by drying and rolling. In this case, the types and contents of the positive electrode and negative electrode active materials, the binder, and the conductive material are as described above. The solvent may be a solvent commonly used in the art, such as dimethyl sulfoxide (DMSO), isopropyl alcohol, N-methylpyrrolidone (NMP), acetone, or water, and any one thereof or a mixture of two or more thereof may be used. A used amount of the solvent is sufficient if it can dissolve or disperse the active material, the conductive material, and the binder in consideration of an applied thickness of a slurry and a manufacturing yield, and then, allows for a viscosity capable of exhibiting excellent thickness uniformity when applied to manufacture a positive electrode and a negative electrode. Alternatively, the positive electrode and the negative electrode may be manufactured by laminating, on a current collector, a film obtained by casting the composition for active material layer formation on a separate support and peeling off it from the support.

An additional embodiment of the present specification provides a method for manufacturing the positive electrode for a secondary battery according to the above-described embodiments. The manufacturing method includes coating a first composition including a negative electrode active material and a conductive material on a current collector and performing rolling to form a first negative electrode active material layer; and coating a second composition including a negative electrode active material and a conductive material on the first negative electrode active material layer and performing rolling to form a second negative electrode active material layer such that the second negative electrode active material layer has a porosity 5% to 20% higher than that of the first negative electrode active material layer.

The types of specific active materials and conductive materials of the respective negative electrode active material layers described above and the manufacturing method in which separate rolling is performed when forming each negative electrode active material layer can enable the porosity of the second negative electrode active material layer to be different from, and specifically, higher than that of the first negative electrode active material layer. For example, after coating the first negative electrode active material layer, rolling tailored to a targeted porosity may be performed, and after coating the second negative electrode active material layer, rolling tailored to a targeted porosity may be performed secondarily, and then, drying may be performed collectively.

The separator serves to separate the negative electrode and the positive electrode and to provide a migration path of lithium ions, in which any separator may be used as the separator without particular limitation as long as it is typically used in a secondary battery, and particularly, a separator having high moisture-retention ability for an electrolyte solution as well as a low resistance against migration of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte solution, in which, for example, one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

The secondary battery according to an embodiment of the present invention includes an assembly including a positive electrode, a negative electrode, a separator, and an electrolyte, and may be a lithium secondary battery.

A further embodiment of the present invention provides a battery module including the aforementioned secondary battery as a unit cell, and a battery pack including the battery module. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Since the secondary battery according to the embodiments of the present invention stably exhibits excellent discharge capacity, output characteristics, and cycle performance, the secondary battery can be used as a power source of a portable device such as a mobile phone, a laptop computer, and a digital camera as well as a medium to large sized device selected from the group consisting of an electric vehicle, a hybrid electric vehicle, a plug-in hybrid electric vehicle and a power storage system. For example, the battery module or battery pack may be used as a power source of a medium to large sized device of any one or more of a power tool; an electric vehicle including an electric vehicle (EV), a hybrid electric vehicle, and a plug-in hybrid electric vehicle (PHEV); or a power storage system.

### Mode for Invention

Hereinafter, preferred examples will be provided for better understanding of the present invention. It will be apparent to one skilled in the art that the examples are only provided to illustrate the present invention and various modifications and alterations are possible within the scope the appended claims which define the present invention. Such modifications and alterations naturally fall within the scope of claims included herein.

### Example 1

The first negative electrode active material layer was coated to a thickness of about 50 µm on the negative electrode current collector and then rolled at room temperature. Next, the second negative electrode active material layer was coated to a thickness of about 50 µm and then rolled at room temperature. After the rolling, drying was performed collectively. Rolling of each layer was performed to achieve the porosity shown in Table 1 below.

As a composition for preparing the first and second negative electrode active material layers, a composition including a negative electrode active material including artificial graphite, natural graphite, and SiO, a conductive material (including a linear conductive material (CNT) and a planar conductive material (graphene)), a binder (SBR), and a thickener at a weight ratio of 94:1:2:1 was used.

The porosity of each negative electrode active material layer is shown in Table 1 below. The porosity was measured through cross-sectional image analysis and ratio calculation.

A positive electrode was prepared by coating a positive electrode current collector with a composition including Li_{1.0}Ni_{0.86}Co_{0.08}Mn_{0.06}O₂, a conductive material (CNT), and a binder (PVDF) at a weight ratio of 97:1:2, respectively, and then performing drying and rolling.

A battery was prepared by stacking the positive electrode and the negative electrode with a separator interposed therebetween and injecting an electrolyte solution. The electrolyte solution included 1M LiPF₆, EC (ethylene carbonate)/EMC (ethyl methyl carbonate) (3/7 volume ratio), 1.5 wt% of VC (vinylene carbonate), and 0.5 wt% of PS (propane sultone).

### Comparative Example 1

The same procedure as in Example 1 was performed, except that
the first negative electrode active material layer and the second negative electrode active material layer were simultaneously coated to a total thickness of about 100 µm, followed by performing rolling collectively and drying.

**[Table 1]**

| | Porosity (%) of first negative electrode active material layer | Porosity (%) of second negative electrode active material layer |
|---|---|---|
| Example 1 | 18.3 | 31.7 |
| Comparative Example 1 | 23.4 | 26.4 |

FIG. 1 shows a chargeable depth of SOC per C-rate of the negative electrodes of the batteries prepared in the Example and the Comparative Example. According to FIG. 1, it could be confirmed that the battery prepared in Example 1 showed a greater depth of charge compared to Comparative Example 1.

## Claims

1. A negative electrode for a secondary battery, comprising:
a current collector;
a first negative electrode active material layer provided on the current collector; and
a second negative electrode active material layer provided on the first negative electrode active material layer,
wherein a porosity of the second negative electrode active material layer is 5% to 20% higher than a porosity of the first negative electrode active material layer, and
wherein the first and second negative electrode active material layers each comprise a negative electrode active material, the negative electrode active material comprises a silicon-based active material, artificial graphite, and natural graphite, and the silicon-based active material comprises at least one of SiOₓ, wherein 0≤x≤2, SiM_{y}, M is a metal, 1≤y≤4, and Si/C, and
wherein the silicon-based active material is included in an amount of 1 to 40 parts by weight on the basis of total 100 parts by weight of the active material included in each of the first and second negative electrode active material layers.

2. The negative electrode for a secondary battery of claim 1, wherein the porosity of the second negative electrode active material layer is 10% to 20% higher than the porosity of the first negative electrode active material layer.

3. The negative electrode for a secondary battery of claim 1, wherein the porosities of the first negative electrode active material layer and the second negative electrode active material layer are 15% to 40%, respectively.

4. The negative electrode for a secondary battery of claim 1, wherein the first and second negative electrode active material layers each comprise a conductive material, and the conductive material comprises at least one of a particulate conductive material, a linear conductive material, and a planar conductive material.

5. The negative electrode for a secondary battery of claim 4, wherein the conductive material is included in an amount of 0.1 to 5 parts by weight on the basis of 100 parts by weight of each of the first and second negative electrode active material layers.

6. A secondary battery comprising the negative electrode of any one of claims 1 to 5, a positive electrode, and a separator.

7. The secondary battery of claim 6, wherein the positive electrode comprises a lithium composite transition metal compound including nickel (Ni) and cobalt (Co), as an active material.

8. The secondary battery of claim 7, wherein the lithium composite transition metal compound further comprises at least one of manganese and aluminum.

9. A method for manufacturing the negative electrode for a secondary battery of any one of claims 1 to 5, the method comprising:
coating a first composition comprising a negative electrode active material and a conductive material on a current collector and performing rolling to form a first negative electrode active material layer; and
coating a second composition comprising a negative electrode active material and a conductive material on the first negative electrode active material layer and performing rolling to form a second negative electrode active material layer such that the second negative electrode active material layer has a porosity 5% to 20% higher than that of the first negative electrode active material layer.

## Patentansprüche

1. Negative Elektrode für eine Sekundärbatterie, umfassend:
einen Stromkollektor;
eine erste Aktivmaterialschicht der negativen Elektrode, die auf dem Stromkollektor vorgesehen ist; und
eine zweite Aktivmaterialschicht der negativen Elektrode, die auf der ersten Aktivmaterialschicht der negativen Elektrode vorgesehen ist,
wobei eine Porosität der zweiten Aktivmaterialschicht der negativen Elektrode 5 % bis 20 % höher ist als eine Porosität der ersten Aktivmaterialschicht der negativen Elektrode, und
wobei die erste und die zweite Aktivmaterialschicht der negativen Elektrode jeweils ein Aktivmaterial der negativen Elektrode umfassen, das Aktivmaterial der negativen Elektrode ein Aktivmaterial auf Siliziumbasis, künstlichen Graphit und natürlichen Graphit umfasst, und das Aktivmaterial auf Siliziumbasis mindestens eines aus SiOₓ, wobei 0 ≤ *x* < 2, SiM_{y}, wobei M ein Metall ist und 1 ≤ *y* ≤ 4, und Si/C umfasst, und
wobei das Aktivmaterial auf Siliziumbasis in einer Menge von 1 bis 40 Gewichtsteilen auf der Basis von insgesamt 100 Gewichtsteilen des Aktivmaterials enthalten ist, das jeweils in der ersten und der zweiten Aktivmaterialschicht der negativen Elektrode enthalten ist.

2. Negative Elektrode für eine Sekundärbatterie nach Anspruch 1, wobei die Porosität der zweiten Aktivmaterialschicht der negativen Elektrode 10 % bis 20 % höher ist als die Porosität der ersten Aktivmaterialschicht der negativen Elektrode.

3. Negative Elektrode für eine Sekundärbatterie nach Anspruch 1, wobei die Porositäten der ersten Aktivmaterialschicht der negativen Elektrode und der zweiten Aktivmaterialschicht der negativen Elektrode jeweils 15 % bis 40 % betragen.

4. Negative Elektrode für eine Sekundärbatterie nach Anspruch 1, wobei die erste und die zweite Aktivmaterialschicht der negativen Elektrode jeweils ein leitfähiges Material umfassen und das leitfähige Material mindestens eines aus einem teilchenförmigen leitfähigen Material, einem linearen leitfähigen Material und einem planaren leitfähigen Material umfasst.

5. Negative Elektrode für eine Sekundärbatterie nach Anspruch 4, wobei das leitfähige Material in einer Menge von 0,1 bis 5 Gewichtsteilen auf der Basis von 100 Gewichtsteilen jeweils der ersten und der zweiten Aktivmaterialschicht der negativen Elektrode enthalten ist.

6. Sekundärbatterie, umfassend die negative Elektrode nach einem der Ansprüche 1 bis 5, eine positive Elektrode und einen Separator.

7. Sekundärbatterie nach Anspruch 6, wobei die positive Elektrode eine Lithium-Komposit-Übergangsmetallverbindung umfasst, die Nickel (Ni) und Cobalt (Co) als Aktivmaterial einschließt.

8. Sekundärbatterie nach Anspruch 7, wobei die Lithium-Komposit-Übergangsmetallverbindung ferner mindestens eines aus Mangan und Aluminium umfasst.

9. Verfahren zur Herstellung der negativen Elektrode für eine Sekundärbatterie nach einem der Ansprüche 1 bis 5, wobei das Verfahren umfasst:
Beschichten einer ersten Zusammensetzung, die ein Aktivmaterial der negativen Elektrode und ein leitfähiges Material umfasst, auf einen Stromkollektor und Durchführen eines Walzens, um eine erste Aktivmaterialschicht der negativen Elektrode zu bilden; und
Beschichten einer zweiten Zusammensetzung, die ein Aktivmaterial der negativen Elektrode und ein leitfähiges Material umfasst, auf die erste Aktivmaterialschicht der negativen Elektrode und Durchführen eines Walzens, um eine zweite Aktivmaterialschicht der negativen Elektrode zu bilden, so dass die zweite Aktivmaterialschicht der negativen Elektrode eine Porosität aufweist, die 5 % bis 20 % höher ist als die der ersten Aktivmaterialschicht der negativen Elektrode.

## Revendications

1. Électrode négative pour une batterie secondaire, comprenant :
un collecteur de courant ;
une première couche de matériau actif d'électrode négative disposée sur le collecteur de courant; et
une seconde couche de matériau actif d'électrode négative disposée sur la première couche de matériau actif d'électrode négative,
dans laquelle une porosité de la seconde couche de matériau actif d'électrode négative est de 5 % à 20 % supérieure à une porosité de la première couche de matériau actif d'électrode négative, et
dans laquelle les première et seconde couches de matériau actif d'électrode négative comprennent chacune un matériau actif d'électrode négative, le matériau actif d'électrode négative comprend un matériau actif à base de silicium, du graphite artificiel et du graphite naturel, et le matériau actif à base de silicium comprend au moins l'un parmi SiOₓ, où 0 ≤ *x* < 2, SiM_{y}, M est un métal, 1 ≤ y ≤ 4, et Si/C, et
dans laquelle le matériau actif à base de silicium est inclus en une quantité de 1 à 40 parties en poids sur la base de 100 parties en poids au total du matériau actif inclus dans chacune des première et seconde couches de matériau actif d'électrode négative.

2. Électrode négative pour une batterie secondaire selon la revendication 1, dans laquelle la porosité de la seconde couche de matériau actif d'électrode négative est de 10 % à 20 % supérieure à la porosité de la première couche de matériau actif d'électrode négative.

3. Électrode négative pour une batterie secondaire selon la revendication 1, dans laquelle les porosités de la première couche de matériau actif d'électrode négative et de la seconde couche de matériau actif d'électrode négative sont de 15 % à 40 %, respectivement.

4. Électrode négative pour une batterie secondaire selon la revendication 1, dans laquelle les première et seconde couches de matériau actif d'électrode négative comprennent chacune un matériau conducteur, et le matériau conducteur comprend au moins l'un parmi un matériau conducteur particulaire, un matériau conducteur linéaire et un matériau conducteur planaire.

5. Électrode négative pour une batterie secondaire selon la revendication 4, dans laquelle le matériau conducteur est inclus en une quantité de 0,1 à 5 parties en poids sur la base de 100 parties en poids de chacune des première et seconde couches de matériau actif d'électrode négative.

6. Batterie secondaire comprenant l'électrode négative de l'une quelconque des revendications 1 à 5, une électrode positive et un séparateur.

7. Batterie secondaire selon la revendication 6, dans laquelle l'électrode positive comprend un composé de métal de transition composite au lithium incluant du nickel (Ni) et du cobalt (Co), en tant que matériau actif.

8. Batterie secondaire selon la revendication 7, dans laquelle le composé de métal de transition composite au lithium comprend en outre au moins l'un parmi le manganèse et l'aluminium.

9. Procédé de fabrication de l'électrode négative pour une batterie secondaire de l'une quelconque des revendications 1 à 5, le procédé comprenant :
le revêtement d'une première composition comprenant un matériau actif d'électrode négative et un matériau conducteur sur un collecteur de courant et la réalisation d'un laminage pour former une première couche de matériau actif d'électrode négative ; et
le revêtement d'une seconde composition comprenant un matériau actif d'électrode négative et un matériau conducteur sur la première couche de matériau actif d'électrode négative et la réalisation d'un laminage pour former une seconde couche de matériau actif d'électrode négative de telle sorte que la seconde couche de matériau actif d'électrode négative ait une porosité de 5 % à 20 % supérieure à celle de la première couche de matériau actif d'électrode négative.
